(19) **Europäisches Patentamt European Patent Office Office européen des brevets**

(11) **EP 3 790 803 B1**

(12) **EUROPEAN PATENT SPECIFICATION**

(45) Date of publication and mention
of the grant of the patent:
**17.08.2022 Bulletin 2022/33**

(21) Application number: **19718162.1**

(22) Date of filing: **16.04.2019**

(51) International Patent Classification (IPC):
**B32B 3/12** *(2006.01)*     **B32B 5/26** *(2006.01)*
**B32B 7/12** *(2006.01)*     **B32B 15/092** *(2006.01)*
**B32B 15/14** *(2006.01)*     **B32B 15/20** *(2006.01)*
**B64D 45/02** *(2006.01)*     **B32B 3/26** *(2006.01)*
**H02G 13/00** *(2006.01)*

(52) Cooperative Patent Classification (CPC):
**B64D 45/02; B32B 3/12; B32B 3/266; B32B 5/26;**
**B32B 7/12; B32B 15/092; B32B 15/14;**
**B32B 15/20;** B32B 2262/106; B32B 2307/202;
B32B 2307/206; B32B 2307/718; B32B 2605/18;
H02G 13/40

(86) International application number:
**PCT/EP2019/059744**

(87) International publication number:
**WO 2019/214910 (14.11.2019 Gazette 2019/46)**

(54) **COMPOSITE PANEL COMPRISING A PERFORATED METALLIC FOIL FOR LIGHTNING STRIKE PROTECTION**

VERBUNDPLATTE MIT PERFORIERTER METALLFOLIE FÜR BLITZSCHUTZ

PANNEAU COMPOSITE COMPRENANT UNE FEUILLE MÉTALLIQUE PERFORÉE POUR UNE PROTECTION CONTRE LA FOUDRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **08.05.2018 US 201815973905**
**30.05.2018 EP 18382370**

(43) Date of publication of application:
**17.03.2021 Bulletin 2021/11**

(73) Proprietor: **Airbus (S.A.S.)**
**31700 Blagnac (FR)**

(72) Inventors:
• **RAHAMAT, Mohammed Salim**
**WALLINGFORD, Connecticut 06492 (US)**
• **MURDOCH, Mark A.**
**WALLINGFORD, Connecticut 06492 (US)**
• **BURTT, Kenneth William**
**WALLINGFORD, Connecticut 06492 (US)**
• **MACDONALD, Brett Alexander**
**WALLINGFORD, Connecticut 06492 (US)**
• **FLOURENS, Franck**
**31700 BLAGNAC (FR)**
• **MURILLO, Richard**
**31700 BLAGNAC (FR)**
• **GARCIA MARTINEZ, Valentin**
**31700 BLAGNAC (FR)**
• **PEREZ CABRERO, Pablo**
**31700 BLAGNAC (FR)**

(56) References cited:
**EP-A1- 0 522 663**     **US-A1- 2006 051 592**
**US-A1- 2010 147 546**     **US-A1- 2012 003 495**
**US-A1- 2012 271 564**

**Description**

This invention relates to a composite panel comprising a perforated metallic foil for lightning strike protection of an aerospace structure.

Aluminum has been the principal material used in aircraft and aerospace construction for the past 60 years. With the growing interest to construct more efficient aircraft, manufacturers are designing more components out of light-weight composite materials. In particular, current composite panels forms the skin of the fuselage, and of the wings. Composites, however, are poor conductors of electrical current. It is know that without proper protection, composite materials are susceptible to severe damage in the event of a lightning strike. To date, aircraft manufacturers have used aluminum or copper expanded foils or woven wire mesh incorporated into these composite panels to dissipate lightning strike energy and prevent damage to the composite panel.

Of the two approaches, expanded metallic foils have become the industry standard and are superior to woven wire as they do not unravel or have loose strands that may become problematic during processing into a pre-preg-material or when conducting a dry lay-up as part of the composite manufacturing process. The homogenous design of expanded metallic foils also ensures uncompromised conductivity even when forming the material into a variety of shapes and contours and it provides a smooth surface on the end product. Expanded metallic foils used in this application must be manufactured with tight tolerances to meet a specific weight, open area, and conductivity requirements.

Aircraft manufactures use design guidelines, such as those set forth by SAE International in its Aerospace Recommended Practice (ARP) 5414, which defines lightning strike zones (areas of the aircraft more susceptible to lightning strikes (e.g. Zone 1A, 1B). It also provides required electrical withstand capabilities for such strike zones. For example, often materials are required to have the ability to withstand a Zone 1A strike of 200,000 amps. For expanded foils, due to the limitations of the expansion process, the thinnest material possible to meet this criteria to date has been produced using 42 micrometers foils. The weight of this material is 175 grams per square meter, the resistivity is 3.6 milliohms per square, and the foil has 56% open area. A way to characterize the performance of foils in this application is to assess the foil's weight to conductivity ratio, with conductivity being the inverse of resistivity and represented in gram-ohms (gr-ohms) per square. For the above expanded foil, its weight to conductivity ratio is 0.63 gr-ohms.

Aircraft manufacturers are always looking for ways to increase efficiency, reduce costs, improve fuel economy, and reduce the amount of $CO_2$ emissions. One clear way to achieve these objectives is to reduce aircraft weight. By reducing the weight of the composite panels, the overall weight of the aircraft may be reduced; however, the conductivity criteria required for specific strike zones per SAE ARP54 1 4 must still be satisfied.

Thus, it would be desirable to produce lighter composite panels, which still meet the required electrical withstand capabilities.

We know from the patent application US2006/051592, a bypass solution to the aforementioned needs. This solution consists in fixing an applique (i.e. decal) to an already manufactured composite panel in order to improve the electrical withstand capabilities of the latter. The applique comprises a metallic foil embedded in a layer made from resin and which forms the external surface of the appliqué/decal.

This solution is efficient, but attaching the applique to the panel requires several steps which must be carried out with great care and a surface treatment of the panel beforehand. Without great care when performing those steps, operators will observe rapid peeling of the applique.

The invention aims at providing a composite panel that is, intrinsically by its manufacturing, lighter than composite panels from the prior art, and which still meet the required electrical withstand capabilities, and which is moreover resistant to erosion. To this end, the invention is directed to a composite panel for aerospace structure as claimed in claim 1.

Embodiments of the present invention will now be described, by way of example only, with reference to the attached Figures, wherein:

- Fig. 1 is a cross sectional view of a composite panel including a perforated metallic foil according to an aspect of this invention ;
- Fig. 2 is a perspective view of a portion of a perforated metallic foil for a composite panel as illustrated in FIG. 1 ;
- Fig. 3 is a perspective view of a portion of a prior art expanded foil;
- Fig. 4 is a plan view of a portion of the perforated metallic foil of the Fig.2 having elliptical-shaped apertures;
- Fig. 5 is a plan view of a portion of a perforated metallic foil having diamond-shaped apertures;
- Fig. 6 is a plan view of a portion of a perforated metallic foil having oval-shaped apertures ;
- Fig. 7 is a plan view of a portion of a perforated metallic foil having circle-shaped apertures ;
- Fig. 8 is a plan view of a portion of a perforated metallic foil having square-shaped apertures ;
- Fig. 9 is a perspective view of a perforating machine for producing a perforated metallic foil.
- Fig. 10 is a view similar to Fig.1 showing a composite panel including a perforated metallic foil according to another aspect of this invention.

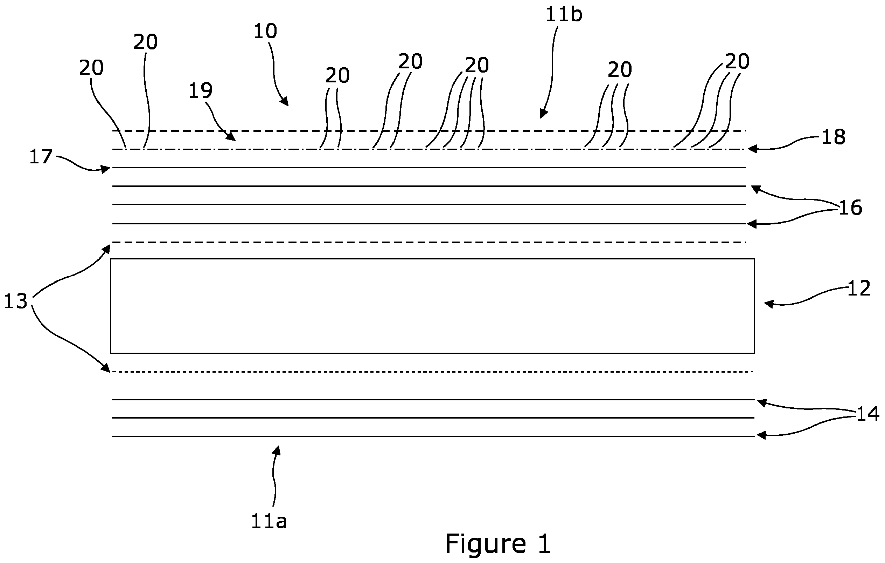

In relation with the Fig.1, a composite panel 10 which is, for example, used to construct the skin of the fuselage of an aircraft, comprises a honeycomb core 12 sandwiched between a first plurality of carbon plies 14 and a second plurality of carbon plies 16. Each one of the first and second plurality of carbon plies 14, 16 is affixed to the honeycomb core 12 using a bonding adhesive 13, such as, for example, epoxy resin. The first plurality of carbon plies 14 is arranged on a back side 11a of the panel 10 which is the side of the composite panel 10 that is cured against a vacuum bag used during the manufacturing of the panel 10.

According to the invention, the composite panel 10 comprises:

- a thin perforated metallic foil 18 which has several apertures 20 and is secured to a plurality of carbon plies, here the second plurality of carbon plies 16 on the example of Fig.1, directly ; and
- a protective layer 19 made from resin (e.g. an epoxy-based resin) secured to the perforated metallic foil 18, with the perforated metallic foil 18 being embedded in the protective layer 19 through its apertures 20. A free surface of the protective layer 19 forms the top side 11b of the composite panel 10, i.e. the side of the panel 10 that when arranged on the structure of an aircraft, will form the exterior face of the skin of the aircraft and, as such, will be paint with protective and decorative paints.

In an embodiment which is not part of the claimed invention, the thin perforated metallic foil 18 is secured to a plurality of carbon plies, here the second plurality of carbon plies 16 indirectly via an optional isolation ply 17 made of electrical insulating material, interposed between the perforated metallic foil 18 and the plurality of carbon plies.

One particular aim of the protective layer 19 is to prevent peeling of the perforated metallic foil 18. To this end, the thickness of the protective layer between the top side 11a of the composite panel 10 and the metallic foil 10 is at least 15 micrometers, and preferably around 40 micrometers. According to claim 1, the protective layer 19 contains a fibrous reinforcement to enhance is mechanical resistance and hence, to even reduce the tendency to peel away due to erosion causes by air flow mixed with dust and water droplets. This reinforcement, woven or non-woven can be in glass fibers or in carbon fibers and its areal weight is comprised between 2 to 20 g/m$^2$.

During the manufacturing process of the composite panel 10, the protective layer 19 pre-impregnates the perforated metallic foil 18, or, in a variant, comes from resin injected or infused during the manufacturing process of the composite panel 10.

In any case, the areal weight of the surfacing film 19 is comprised between 20 and 200g/m$^2$.

The perforated metallic foil 18 is designed to have a very low weight to conductivity ratio and with these characteristics the perforated metallic foil 18 is used to protect an aircraft whose external skin is formed by composite panel 10 according to the invention from lightning strikes of a significant magnitude (e.g. Zone 1A strikes of 200,000 amps or more), while allowing the aircraft manufacturer to produce a lighter weight and more efficient aircraft.

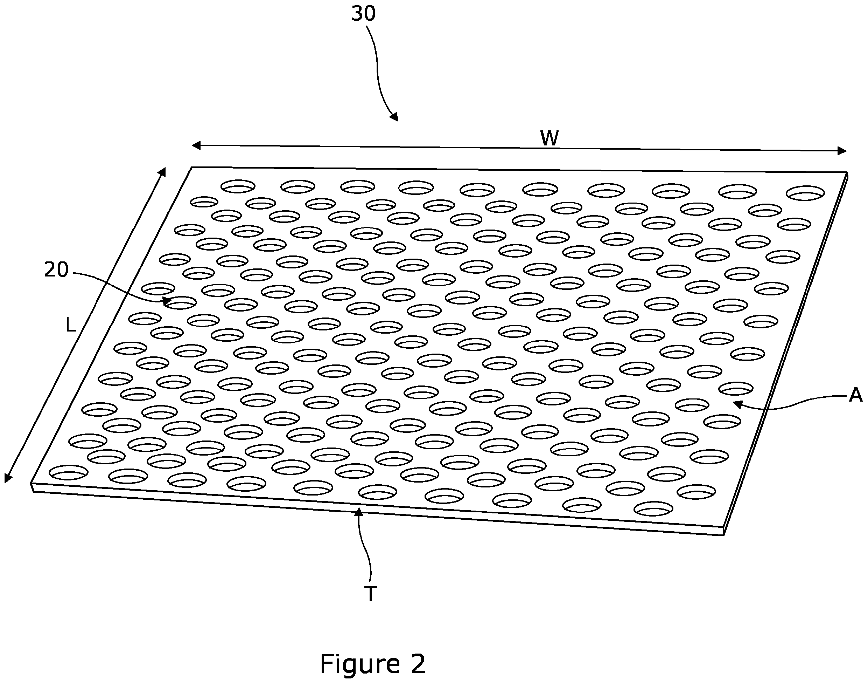

Referring to Fig. 2, a perspective view of a portion 30 of perforated metallic foil 18 having circular-shaped apertures 20 is shown. Portion 30 of the perforated metallic foil 18 is shown to have a length, L, and a width, W, which define a surface area, A, of L*W. Distributed across surface area A are a plurality of apertures 20, which extend through the thickness, T, of the perforated metallic foil 18.

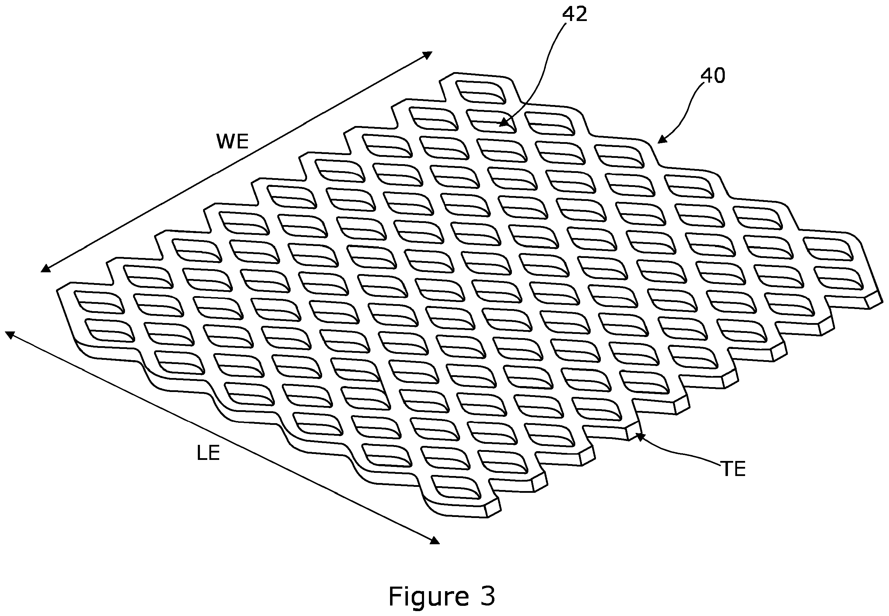

The thickness T is no more than 30 micrometers in order to limit the weight of composite panel 10 . For comparison, and in relation with Fig.3, the thinnest achievable thickness TE of a portion 40 of an expanded material currently manufactured is approximately 40 micrometers. Expanded material is produced by slitting and stretching simultaneously a material. After such a process, the material will present a plurality of pores/openings 42, which in the Fig.3 are diamond-shaped. Due to the limitations of the expansion process, this is the thinnest material achievable while still meeting the low resistivity/high conductivity and strength requirements.

Thinner metallic perforated foils 18 are achievable; however, the apertures size and spacing, as well as the amount of open area relative to total foil area must be optimized to achieve desired weight, strength, adhesion capability, and conductivity. Portion 30 of perforated metallic foil 18 in this example has uniformly spaced elliptical-shaped apertures, which may be formed in the foil by mechanically punching the material or using a laser to cut or ablate the material to form the pores. It is apparent from Figs 2 and 3 that the expanded metallic material portion 40 has a greater amount of open area (defined by aggregate area of pores 42) relative to total area, AE (LE *WE), than does portion 30 of perforated metallic foil, which has less open area (defined by aggregate area of pores 32) relative to total area, A. Limiting the open area allows the perforated metallic foil 18 to be made much thinner while still achieving the required strength and resistivity characteristics.

The open area of the perforated metallic foil 18 generally needs to be equal or below 40% of the overall surface area of the perforated metallic foil 18 in order to obtain a good compromise between weight and electrical performance.

The perforated metallic foil 18 is also configured to provide optimal adhesive qualities so that it can be layered into and effectively embedded in resin layers such as the protective layer 19. For purposes of our description, good adhesion of the perforated metallic foil 18 to a composite panel 10 after a curing cycle is one that prevents substantial peeling (e.g. less than 25%) of the perforated metallic foil 18 upon application of a high water jet with the following parameters: pressure, duration, distance, sweeping angle, sweeping frequency, water temperature, maximum peeled surface. The values for these parameters may be defined based of the requirements of the particular application.

It is desired to maximize the open area to allow the perforated metallic foil 18 to be stretched and hence to be applied on surfaces having double curvatures as could be the composite panel 10 to form an aircraft skin. The size and shape of the apertures 20 can vary has it will be explained below. However, when the perforated metallic foil 18 of a composite panel 10 is submitted to a peeling force, the shearing of the surfacing film thickness occurs on top of the aperture 20 edges. Thus, to reduce the shearing constrain encountered by the protective layer 19 and hence to increase the tolerance to peeling, it is advantageous to maximize the sum of the perimeters of all the apertures 20 per surface unit. For a given aperture rate, this is obtained by reducing both the aperture size and their pitch. Hence, the aperture size of the apertures 20 of the perforated metallic foil 18 are defined such that the maximum distance between two opposed points in the perimeter of an aperture 20 is comprised between 0.25 millimeters and 3 millimeters.

The limiting factor regarding how small the apertures 20 can be made belongs to the perforation process and to its associated speed.

In case perforations are made by mechanical puncturing/perforation (e.g. die-based perforation), the capability to manufacture small punches and the capability of the puncturing machine will limit the minimum size of the apertures 20. It has been found that apertures 20 having a dimension of 1mm was close to the realistic limit.

In case perforations are made by laser etching, apertures 20 can be made smaller, i.e. between 0.25mm and 1 mm

Taking into account the ability of the perforated metallic foil 18 to be stretched, the peeling tolerance, and the constrain coming from perforation process, a pattern achieved with apertures 20 having a dimension around 1mm and an open area around 30% has been found to be convenient.

The typical types of metallic material which may be used for the perforated foil are copper, aluminum, and alloys thereof.

For a copper or copper alloy perforated foil 18, the plurality of apertures 20, in the aggregate, define an open area of not more than 40% of the surface area. The weight of the perforated copper foil 18 is not more than 300 g/m$^2$, preferably 115 g/m$^2$. Such a foil 18 of 115 g/m$^2$ has a resistance of not more than 3.5 milliohms per square. This yields a weight to conductivity ratio of 0.40 gr-ohms. Compared with the 40 micrometers thick expanded copper foil described above, which has a 0.63 gr-ohms weight to conductivity ratio, this is over a 35% improvement. With the perforated metallic foil 18 and processing used herein, it is expected that copper or copper alloy foils 18 as thin as approximately 12 micrometers would be achievable with comparable weight to conductivity ratios.

For an aluminum or aluminum alloy perforated foil 18 herein, the plurality of apertures 20, in the aggregate, define an open area of not more than 40% of the surface area. The weight of the perforated aluminum foil 18 may be not more than 250 g/m$^2$. The perforated foil 18 may have a resistance of not more than 5.5 milliohms per square. This yields a weight to conductivity ratio of 0.19 gr-ohms. Compared with the 0.63 gr-ohms of the expanded copper foil, this is over a 70% improvement in the weight to conductivity ratio. With the perforated metallic foil 18 and processing used herein, it is expected that aluminum or aluminum alloy foils as thin as approximately 12 micrometers would also be achievable with comparable weight to conductivity ratios.

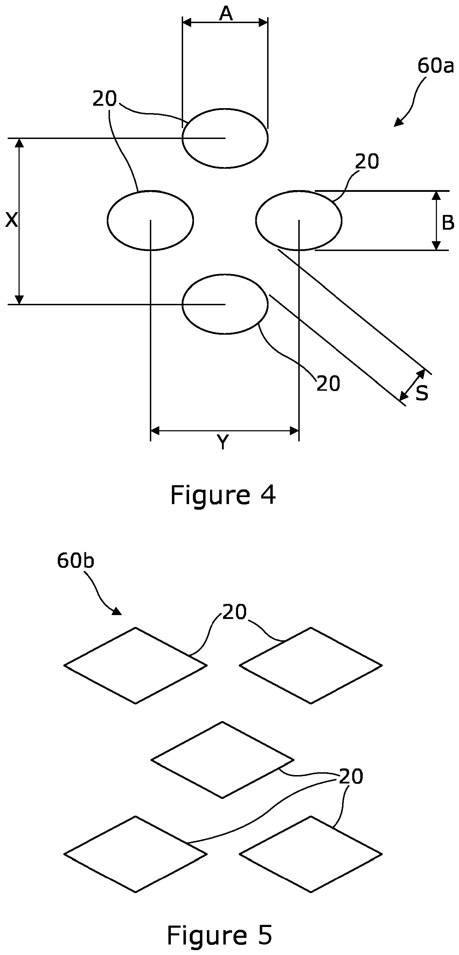

Historically, lightning strike applications have primarily utilized either a woven material, which yields a square pattern, or expanded material, which yields a diamond or hexagonal shapes. By using perforated apertures, and in relation with Figs. 4 to 8, the open area in a perforated metallic foil 18 may be formed with apertures of different shapes, sizes, spacing and patterns.

The most efficient shapes, in terms of electric field lines, are rounded, as sharp corners that are necessarily prevalent in woven or expanded materials create higher flux density in the areas of the sharp corners. These higher flux areas naturally increase the measured resistivity of the material.

Referring to Fig 4, a portion 60a of a perforated metallic foil 18 is shown to include equally sized, elliptically shaped apertures 20. The apertures 20 may be sized as required for a particular application as long as the maximum distance between two opposed points (length A) in the perimeter of an aperture 20 is comprised between 0.25 mm and 3mm, as required to increase the tolerance to peeling.

The open area of material may be determined by the following equation:

$$(1) \quad \text{Open Area} = 1 - \text{Desired Weight I (Thickness x Density)}$$

As an example, taking a desired weight of 100 grams per square meter (gsm) and using 17 micrometers thick copper as the desired material, which has a density of 8.89 x 106 g/m$^3$, the open area is determined to be:

$$(2) \quad \text{Open Area} = 1 - 100 \text{ I } (17 \times 10\text{-}6 \times 8.89 \times 106) = 33.8\%$$

A 17 micrometers thick copper material having a weight of 100g/m$^2$ will be suitable to produce a perforated metallic foil 18 according to the invention.

Once the targeted open area, apertures size and shape are selected, the spacing of the apertures can be determined to achieve the resulting configuration. Carrying on with the example above, for an elliptical shape apertures, calculations are as follows:

$$(3) \quad \text{Area of ellipse: pi * pore length (A)/2 * pore height (B)/2}$$

$$(4) \quad \text{Open area = ellipse area * 2 / (X) * (Y)}$$

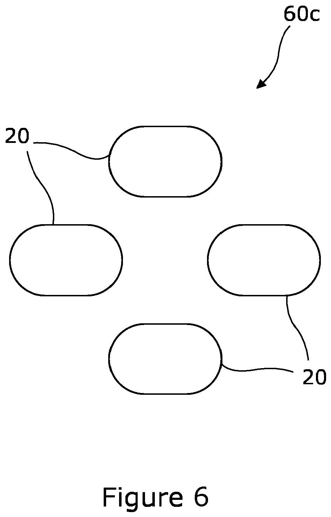

Referring to Fig.5 a portion 60b of a perforated metallic foil 18 is shown to include equally sized, diamond-shaped pores 20 which may be used to form a 17 micrometers thick copper foil suitable for lightning strike applications. Referring to Fig.6, a portion 60c of a perforated metallic foil 18 is shown to include equally sized, oval-shaped apertures 20 which also may be used to form a 17 micrometers thick copper foil suitable for lightning strike applications.

Using ellipses, ovals or diamond shape apertures, as shown in Figs. 4 to 6, can be beneficial to obtain a material with fine-tuned anisotropy in term of electrical resistance. The resistivity along the "X" direction versus along the "Y" direction will differ depending upon the spacing and length to height ratio of the apertures 20. It is sometimes desired to utilize a perforated metallic foil 18 with conductive properties that are approximately equal in all directions, i.e. "isotropic". To achieve isotropic features for conductivity, a symmetrical pattern may be used, either in the form of circles or squares.

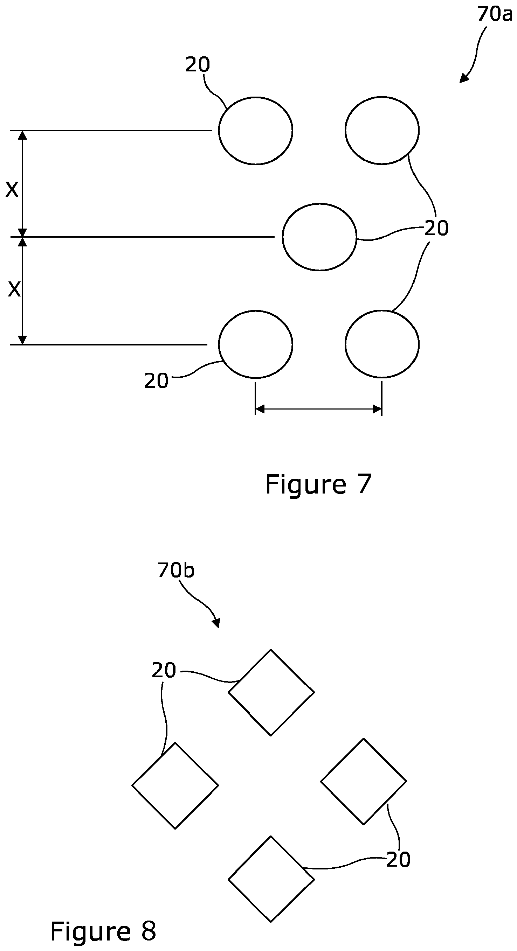

Referring to Fig.7, a portion 70a of a perforated metallic foil 18 is shown to include equally sized, and symmetrically spaced circle-shaped apertures 20. Referring to Fig.8, a portion 70b of a perforated metallic foil 18 is shown to include equally sized, and symmetrically spaced square-shaped apertures 20.

Although not illustrated other shapes for the apertures 20, e.g. polygonal, are possible in order to meet the need for particular electrical resistance of the perforated metallic foil 18.

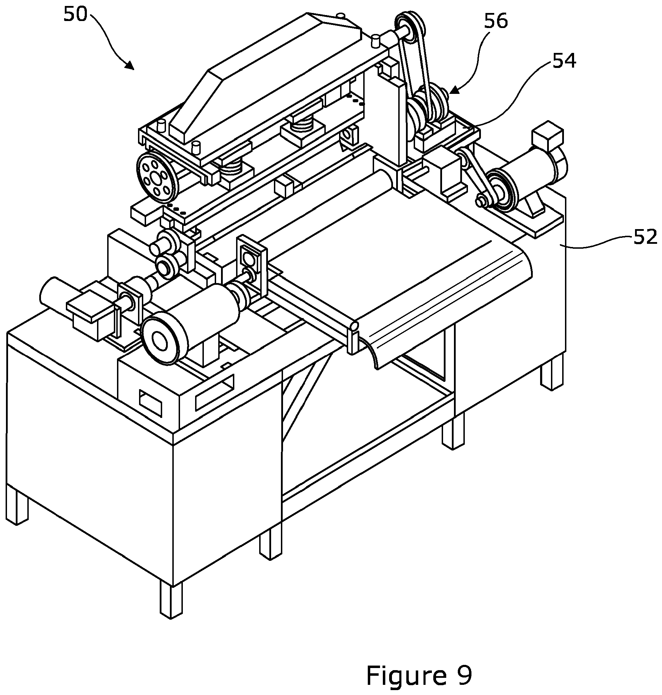

A method of manufacturing of the perforated metallic foil 18 includes an in-line process of perforating a metallic foil with specifically sized and spaced apertures of various geometric shapes to achieve desired performance characteristics. This could be accomplished using a perforating machine, such as machine 50 depicted in Fig. 9.

According to this manufacturing method, a wide web of thin metallic foil 52 with a thickness less than 30 micrometers, with backing material (not visible) is shown being fed under roller 54 and into the cutting dies 56. The backing material also helps to control tension of the metal foil 52 as it traverses through the cutting dies 56. While not shown in this view, the web of solid foil 52 may be processed in a reel to reel operation. In other words, solid metallic foil 52 with backing material may be fed into machine 50 via a pay-out reel and the web of perforated metallic foil may be received from machine and collected on a take-up reel.

The metallic foil 52 may be pretreated to improve its durability and adhesion characteristics. In addition, the metallic foil 52 may be passivated, which creates an inert surface that is resistant to tarnishing and oxidation. Also, the metallic foil 52 may be coated with silane, which helps to provide the material with improved adhesion characteristics.

By perforating the thin metallic foil 52, it is obtained a perforated metallic foil 18 with a plurality of apertures 20 of a predefined geometric shape extending through the thickness of the metallic foil 52 and being distributed across a surface area may be formed. The aggregate amount of open area formed by the apertures 20 is configured to provide maximum conductivity while maintaining as light a weight as possible. Sizing of the apertures 20 is very important in order to maintain desired strength, conductivity, and effective adhesion properties and the following sections describe exemplary methods for designing the open area for perforated metallic foil 18 according to this invention.

An alternate approach (not illustrated) to using a mechanical die-based perforating machine, such as machine 50, would be to use a reel-to-reel galvanometric laser to accomplish the precision cutting/ablating to manufacture the metallic foils according to an aspect of this invention.

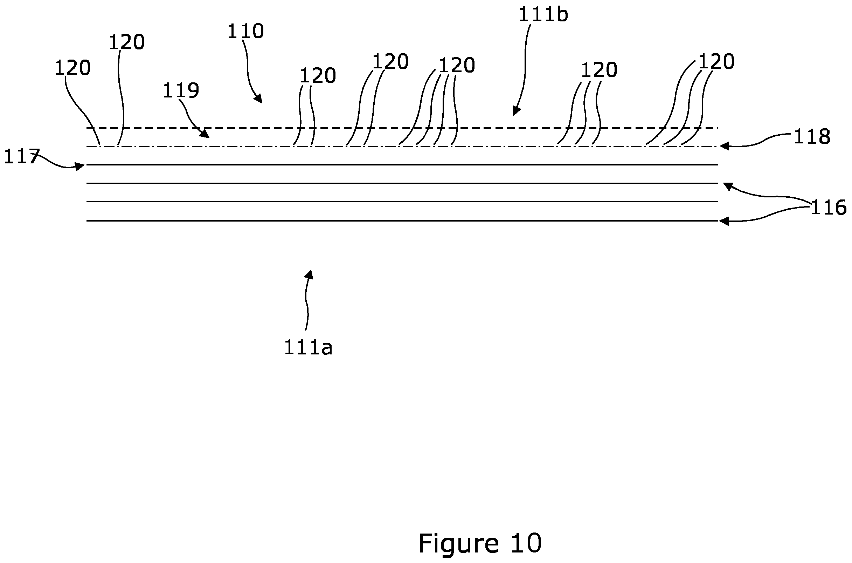

The invention has been described above when the composite panel 10 comprises a honeycomb core 12. In another variant of the invention, and in relation with the Fig. 10, the composite panel 110 is monolithic and comprises a plurality of carbon plies 116 arranged on a back side 111a of the panel 110.

A thin perforated metallic foil 118, of identical characteristic than that of the perforated metallic foil 18 described in connection with Figs. 1 to 8, and comprising several apertures 120, is secured to the plurality of carbon plies 116, directly, or, not according to claim 1, indirectly via an optional isolation ply 117 made of electrical insulating material, interposed between the perforated metallic foil 118 and the plurality of carbon plies 116. Finally, a protective layer 119 made from resin (e.g. an epoxy-based resin) is secured to the perforated metallic foil 118, with the perforated metallic foil 118 being embedded in the protective layer 119 through its apertures 120. A free surface of the protective layer 119 forms a top side 111b of the composite panel 110, i.e. the side of the panel 110 that when arranged on the structure of an aircraft, will form the exterior face of the skin of the aircraft and, as such, will be paint with protective and decorative paints.

The aim of the protective layer 119 is to prevent peeling of the perforated metallic foil 118. To this end, the thickness of the protective layer between the top side 111a of the composite panel 10 and the metallic foil 110 is at least 15 micrometers, and preferably around 40 micrometers. According to claim 1, the protective layer 119 contains a fibrous reinforcement to enhance is mechanical resistance and hence, to even reduce the tendency to peel away due to erosion causes by air flow mixed with dust and water droplets. This reinforcement, woven or non-woven can be in glass fibers or in carbon fibers and its areal weight is comprised between 2 to 20 g/m$^2$.

During the manufacturing process of the composite panel 110, the protective layer 119 can be applied separately from the perforated metallic foil 118 (as a resin film) or it can also pre-impregnate the perforated metallic foil 118, or it could also come from resin injected or infused during the manufacturing process of the composite panel 110.

## Claims

1. A composite panel (10,110) for an aerospace structure, comprising a plurality of carbon plies (16, 116), a perforated metallic foil (18,118) comprising several apertures (20, 120) directly secured to the plurality of carbon plies (16,116), and a protective layer (19,119) made from resin containing a fibrous reinforcement whose areal weight is comprised between 2 to 20 g/m$^2$, said protective layer (19, 119) being secured to the metallic foil (18,118) with the perforated metallic foil (18,118) being embedded in the protective layer (19,119) through its apertures (20,120), a free surface of the protective layer forming a top side (11b,111b) of the composite panel (10,110), the thickness of the protective layer (19,119) between the top side (11b,111b) of the composite panel (10,110) and the perforated metallic foil (18,118) being at least 15 micrometers and the perforated metallic foil (18,110) has a thickness of not more than 30 micrometers, the apertures having a predefined geometric shape extending through the thickness (T) of the perforated metallic foil (18,118) and being distributed across a surface area defined by the length (L) and the width (W) of the perforated metallic foil (18,118), the plurality of apertures (20,120) in the aggregate defining an open area of not more than 40% of the surface area and the maximum distance between two opposed points in the perimeter of an aperture (20) being equal or less than 3 mm.

2. A composite panel (10) according to claim 1, **characterized in that** the perforated metallic foil (18) is made from copper or a copper alloy and has a weight of not more than 300 g/m$^2$ and a weight to conductivity ratio of not more than 0.40 gram-ohms per square.

3. A composite panel (10) according to claim 1, **characterized in that** the perforated metallic foil (18) is made from aluminum or an aluminum alloy and has a weight of not more than 250 g/m$^2$ and a weight to conductivity ratio of not more than 0.19 gram-ohms per square.

4. A composite panel (10) according to any one of the claims 1 to 3, wherein the predefined geometric shape of the plurality of apertures (20) is circular.

5. A composite panel (10) according to any one of the claims 1 to 3, wherein the predefined geometric shape of the plurality of apertures (20) is non-circular.

6. A composite panel (10) according to claim 5, wherein the predefined geometric shape of the plurality of apertures (20) is one among elliptical, diamond, oval, and square.

## Patentansprüche

1. Verbundstoffplatte (10, 110) für eine Luftfahrtstruktur, umfassend eine Vielzahl von Kohlenstofflagen (16, 116), eine perforierte metallische Folie (18, 118), die mehrere Öffnungen (20, 120) umfasst und die direkt an der Vielzahl von Kohlenstofflagen (16, 116) befestigt ist, und eine Schutzschicht (19, 119) aus Harz, die eine Faserverstärkung enthält, deren Flächengewicht in dem Bereich zwischen 2 und 20 g/m$^2$ liegt, wobei die Schutzschicht (19, 119) an der metallischen Folie (18, 118) befestigt ist, die perforierte metallische Folie (18, 118) über ihre Öffnungen (20, 120) in der Schutzschicht (19, 119) eingebettet ist, eine freie Oberfläche der Schutzschicht eine Oberseite (11b, 111b) der Verbundstoffplatte (10, 110) bildet, die Dicke der Schutzschicht (19, 119) zwischen der Oberseite (11b, 111b) der Verbundstoffplatte (10, 110) und der perforierten metallischen Folie (18, 118) wenigstens 15 Mikrometer beträgt und die perforierte metallische Folie (18, 110) eine Dicke von nicht mehr als 30 Mikrometer aufweist, die Öffnungen eine vorgegebene geometrische Form aufweisen, die sich durch die Dicke (T) der perforierten metallischen Folie (18, 118) erstreckt, und über eine Oberfläche, die von der Länge (L) und der Breite (W) der perforierten metallischen Folie (18, 118) definiert ist, verteilt sind, die Vielzahl von Öffnungen (20, 120) in dem Aggregat eine offene Fläche von nicht mehr als 40 % der Oberfläche definieren und der größte Abstand zwischen zwei gegenüberliegenden Punkten an dem Umfang einer Öffnung (20) gleich oder kleiner als 3 mm ist.

2. Verbundstoffplatte (10) gemäß Anspruch 1, **dadurch gekennzeichnet, dass** die perforierte metallische Folie (18) aus Kupfer oder einer Kupferlegierung besteht und ein Gewicht von nicht mehr als 300 g/m$^2$ und ein Gewicht-zu-Leitfähigkeit-Verhältnis von nicht mehr als 0,40 Gramm-Ohm pro Quadrat aufweist.

3. Verbundstoffplatte (10) gemäß Anspruch 1, **dadurch gekennzeichnet, dass** die perforierte metallische Folie (18) aus Aluminium oder einer Aluminiumlegierung besteht und ein Gewicht von nicht mehr als 250 g/m$^2$ und ein Gewicht-zu-Leitfähigkeit-Verhältnis von nicht mehr als 0,19 Gramm-Ohm pro Quadrat aufweist.

4. Verbundstoffplatte (10) gemäß einem der Ansprüche 1 bis 3, wobei die vordefinierte geometrische Form der Vielzahl von Öffnungen (20) kreisförmig ist.

5. Verbundstoffplatte (10) gemäß einem der Ansprüche 1 bis 3, wobei die vordefinierte geometrische Form der Vielzahl von Öffnungen (20) nicht-kreisförmig ist.

6. Verbundstoffplatte (10) gemäß Anspruch 5, wobei die vordefinierte geometrische Form der Vielzahl von Öffnungen (20) eines von elliptisch, rautenförmig, oval und quadratisch ist.

**Revendications**

1. Panneau composite (10, 110) pour une structure aérospatiale, comprenant une pluralité de couches de carbone (16, 116), une feuille métallique perforée (18, 118) comprenant plusieurs ouvertures (20, 120) directement fixée à la pluralité de couches de carbone (16, 116), et une couche protectrice (19, 119) constituée de résine contenant un renforcement fibreux dont le poids surfacique est compris entre 2 et 20 g/m$^2$, ladite couche protectrice (19, 119) étant fixée à la feuille métallique (18, 118) avec la feuille métallique perforée (18, 118) intégrée dans la couche protectrice (19, 119) par ses ouvertures (20, 120), une surface libre de la couche protectrice formant un côté supérieur (11b, 111b) du panneau composite (10, 110), l'épaisseur de la couche protectrice (19, 119) entre le côté supérieur (11b, 111b) du panneau composite (10, 110) et la feuille métallique perforée (18, 118) étant d'au moins 15 micromètres et la feuille métallique perforée (18, 110) ayant une épaisseur ne dépassant pas 30 micromètres, les ouvertures ayant une forme géométrique prédéfinie s'étendant à travers l'épaisseur (T) de la feuille métallique perforée (18, 118) et étant réparties d'un bout à l'autre d'une superficie définie par la longueur (L) et la largeur (W) de la feuille métallique perforée (18, 118), la pluralité d'ouvertures (20, 120) dans l'assemblage définissant une zone ouverte ne dépassant pas 40 % de la superficie et la distance maximale entre deux points opposés sur le périmètre d'une ouverture (20) étant égale ou inférieure à 3 mm.

2. Panneau composite (10) selon la revendication 1, **caractérisé en ce que** la feuille métallique perforée (18) est constituée de cuivre ou d'un alliage de cuivre et a un poids ne dépassant pas 300 g/m$^2$ et un rapport entre poids et conductivité ne dépassant pas 0,40 gramme-ohm par carré.

3. Panneau composite (10) selon la revendication 1, **caractérisé en ce que** la feuille métallique perforée (18) est constituée d'aluminium ou d'un alliage d'aluminium et a un poids ne dépassant pas 250 g/m$^2$ et un rapport entre poids et conductivité ne dépassant pas 0,19 gramme-ohm par carré.

4. Panneau composite (10) selon l'une quelconque des revendications 1 à 3, dans lequel la forme géométrique prédéfinie de la pluralité d'ouvertures (20) est circulaire.

5. Panneau composite (10) selon l'une quelconque des revendications 1 à 3, dans lequel la forme géométrique prédéfinie de la pluralité d'ouvertures (20) n'est pas circulaire.

6. Panneau composite (10) selon la revendication 5, dans lequel la forme géométrique prédéfinie de la pluralité d'ouvertures (20) est soit elliptique, soit en losange, soit ovale, soit carrée.

Figure 1

EP 3 790 803 B1

Figure 2

Figure 3

Figure 9

A

20

60a

20

X

20

B

20

S

Y

20

Figure 4

60b

20

20

Figure 5

60c

20

20

Figure 6

Figure 7

Figure 8

Figure 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006051592 A